# EUROPÄISCHE PATENTSCHRIFT

(11) **EP 2 877 566 B1**
(45) Veröffentlichungstag und Bekanntmachung des Hinweises auf die Patenterteilung: **16.11.2016**
(21) Anmeldenummer: 14713773.1
(22) Anmeldetag: 05.03.2014
(51) Int. Cl.: C12C 7/26, C12C 13/00

(54) **SUDHAUSANLAGE ZUR WÜRZEHERSTELLUNG**
BREWHOUSE INSTALLATION FOR WORT PRODUCTION
SYSTÈME DE BRASSAGE POUR LA PRODUCTION DE MOÛT

(30) Priorität: 13.03.2013 DE 102013004280; 07.10.2013 DE 102013111058
(43) Veröffentlichungstag der Anmeldung: 03.06.2015
(73) Patentinhaber: GEA BREWERY SYSTEMS GMBH, 97318 Kitzingen (DE)
(72) Erfinder: MICHEL, Rudolf, 96049 Bamberg (DE); MÜLLER, Manuel, 97816 Lohr am Main (DE); WECKERT, Jürgen, 91463 Dietersheim (DE)
(74) Vertreter: advotec.
(86) Internationale Anmeldenummer: PCT/EP2014/054253
(87) Internationale Veröffentlichungsnummer: WO 2014/139846

(56) Entgegenhaltungen:
- WO-A1-2011/076410
- WO-A1-2012/052175
- WO-A1-2014/040972
- DE-A1- 3 513 811
- DE-A1-102010 042 765
- DE-U1-202011 110 180
- ZACHARIAS P: "Abnahmemessungen an Würzekühlern. Ergebnisse, Mängel, Richtwerte, Folgerungen für die Praxis", BRAUWELT, NUERNBERG, DE, Bd. 137, Nr. 42, 1. Januar 1997 (1997-01-01), Seiten 1936-1943, XP008136190, ISSN: 0724-696X

## Beschreibung

Die Erfindung betrifft eine Sudhausanlage zur Würzeherstellung.

Die Erfindung betrifft den Teil der Würzebereitung, bei dem die Würze nach der Würzekochung und vor der Zugabe von Hefe heruntergekühlt werden muss. Dieses Herunterkühlen der Würze ist erforderlich, damit die thermischen Umsetzungsprozesse beendet werden und die Hefekulturen für die nun folgende Gärung zugegeben werden können. Es ist deshalb bekannt, dass die Würze nach der Würzekochung und einer Heißtrubentfernung in einem Würzekühler von der Heißwürzetemperatur am Ende der Würzekochung auf die gewünschte Anstelltemperatur, bei der die Hefen den notwendigen biologischen Umsetzungsprozess bewirken können, heruntergekühlt wird. Üblicherweise werden dabei Wärmeübertrager als Würzekühler verwendet, wobei die Wärme aus der Würze im Wärmeübertrager auf geeignetes Kaltwasser übertragen wird. Wärmeübertrager im Sinne der Erfindung werden vielfach auch als Wärmetauscher bezeichnet, weshalb die Begriffe Wärmetauscher und Wärmeübertrager als Synonyme im Sinne der Erfindung verstanden werden sollen.

Das Wasser wird also im Würzekühler von einer Kaltwassertemperatur erwärmt und kann als vorgewärmtes Brauwasser in den Brauprozess eingespeist werden.

In Brauereien ohne Energiespeichersystem kann es, insbesondere in Ländern mit einer hohen Kaltwassertemperatur, zum Beispiel in Afrika, bzw. mit rohstoffbedingten niedrigen Einmaischtemperaturen, zum Beispiel aufgrund unzureichender Rohstoffqualitäten oder entsprechender Rezepturen, dazu kommen, dass der Brauprozess im Sudhaus einen erheblichen Heißwasserüberschuss produziert.

Das Fehlen eines Energiespeichersystems, bei dem über einen Pfannendunstkondensator die Energie aus dem Brüden bei der Würzekochung zurückgewonnen, zwischengespeichert und zur Erhitzung der Würze eines folgenden Sudes eingesetzt wird, kann viele Gründe haben. Beispielsweise ist in vielen Ländern thermische Energie sehr günstig. Damit rechnet sich ein solches System nicht. In modernen Kochsystemen wird oftmals mit sehr geringen Gesamtverdampfungen, also dem prozentualen Verhältnis von verdampfter Wassermasse zu gekochter Würzemasse, gearbeitet. Für Gesamtverdampfungen unter ca. 3-4 % rechnet sich ein solches Energiespeichersystem wirtschaftlich nur sehr selten. Insbesondere die bekannten Rektifikations- oder kontinuierlichen Würzekochsysteme arbeiten mit extrem geringen Gesamtverdampfungen. Wenn ein Würzekochsystem mit thermischem oder mechanischem Brüdenverdichter ausgestattet ist, fällt beispielsweise gar kein Brüden an, dessen Energie für die Würzeerhitzung zurückgewonnen werden kann. Somit gibt es keine energiesparende Möglichkeit, die Würze vor dem Einleiten in die Würzepfanne zu erhitzen. Aber auch im klassischen Sudhaus kann durch entsprechende Rohstoffwahl die Gesamtverdampfung sehr gering ausfallen.

Insbesondere auch beim Herunterkühlen der Würze von der Heißwürzetemperatur auf die Anstelltemperatur und der damit verbundenen Erwärmung des Wassers von der Kaltwassertemperatur auf die Heißwassertemperatur im Hauptheißwassertank kommt es vielfach zu einem erheblichen Heißwasserüberschuss. Wird die Würze beispielsweise von 98 °C auf 9°C herabgekühlt und dabei das Brauwasser von 3 °C auf 78 °C erwärmt, so fällt aufgrund der Energiebilanz dadurch etwa 20 % mehr Heißwasser an als Würze, die den Würzekühler durchströmt. Dies bedeutet mit anderen Worten, dass das Massenverhältnis zwischen dem den Würzekühler durchströmenden Wasser und der den Würzekühler durchströmenden Würze ungefähr im Bereich von 1,2 liegt.

Typische Heißwassertemperaturen im Hauptheißwassertank in einer Brauerei liegen im Bereich von 78 °C bis ca. 85 °C. Unter Hauptheißwassertank sollen der Tank oder die Tanks verstanden werden, in dem/denen das Heißwasser für die Produktionsprozesse, wie insbesondere Sudhausprozesse (Maischen, Läutern, Reinigen, etc.) und/oder auch Gär-, Filtrations- und Abfüllprozesse, bereitgestellt wird.

Unter Zwischentemperatur soll eine Temperatur verstanden werden, die über der Heißwassertemperatur im Hauptheißwassertank liegt.

Liegt nun im Sudhaus ein Heißwasserüberschuss vor und kann dieser weder im Sudhaus noch in benachbarten Abteilungen verwendet werden, so wird der Heißwasserüberschuss meist über das Abwassersystem entsorgt. Damit gehen der Brauerei sowohl Wasser als auch Energie verloren, wobei zusätzlich auch noch Kosten für die Abwasserentsorgung anfallen. Dies ist sowohl wirtschaftlich als auch insbesondere aus Gründen des Umweltschutzes und der Ressourcenschonung ein nicht hinzunehmender Zustand.

WO2011/076410 offenbart ein Verfahren zur Würzekühlung. DE102010042765, DE202011110180 U1 und DE3513811 lehren ein Verfahren und eine Anlage zur Bierherstellung.

Der von ZACHARIAS veröffentlichte Fachaufsatz: "Abnahmemessungen an Würzekühlern. Ergebnisse, Mängel, Richtwerte, Folgerungen für die Praxis", BRAUWELT, NUERNBERG, DE, Bd. 137, Nr. 42, 1. Januar 1997 (1997-01-01), Seiten 1936-1943, (XP008136190, ISSN: 0724-696X) offenbart ein Verfahren und eine Anlage zur Würzekühlung. Dabei wird die 95 °C heiße Würze in einem primären Plattenwärmetauscher mit Brauwasser gekühlt, wobei letzteres erwärmt und in einen Brauwassertank geleitet wird. Die vorgekühlte Würze wird außerdem in einem sekundären Plattenwärmetauscher mit Eiswasser auf 6 °C gekühlt und anschließend zur Gärung überführt.

Aufgabe der vorliegenden Erfindung ist es deshalb, eine neue Sudhausanlage zur Würzeherstellung vorzuschlagen, mit dem Heißwasserüberschüsse verringert oder gänzlich vermieden werden können.

Diese Aufgabe wird durch eine Sudhausanlage nach der Lehre des unabhängigen Hauptanspruchs gelöst.

Vorteilhafte Ausführungsformen der Erfindung sind Gegenstand der Unteransprüche.

Grundgedanke des Verfahrens ist es, dass das Wasser im Würzekühler nicht, wie bisher üblich, direkt auf die Heißwassertemperatur von beispielsweise 78 - 85 °C erwärmt und mit dieser Heißwassertemperatur im Hauptheißwassertank gepuffert wird. Stattdessen wird das Wasser im Würzekühler zunächst auf eine Zwischentemperatur erhitzt, die über der Heißwassertemperatur im Hauptheißwassertank liegt. Durch die Aufnahme von mehr Wärmeenergie im Wasser und die dadurch erzielte höhere Energiedichte im Wasser ist es möglich, die zur Kühlung der Würze notwendige Wassermenge zu reduzieren. Das höhere Energieniveau des Wassers bei der Zwischentemperatur kann dann in einfacher Weise in anderen Bereichen des Sudhauses oder der Brauerei als Wärmeträger genutzt werden, so dass nach einem entsprechenden Entzug eines Teils der Wärmeenergie das Wasser zu einem späteren Zeitpunkt wiederum bei der üblichen Heißwassertemperatur in den Hauptheißwassertank eingespeist werden kann. Dort steht es dann den üblichen Verbrauchern zur Verfügung. Es kann also zur Reinigung, zum Einmaischen, zum Anschwänzen im Läutersystem oder in anderen Abteilungen verwendet werden.

Mit anderen Worten sieht das Verfahren also vor, dass das Wasser im Würzekühler in einem Zwischenschritt zunächst auf ein höheres Energieniveau angehoben wird, das der jeweils eingestellten Zwischentemperatur entspricht, um die bei der Würzekühlung notwendige Wassermenge zu reduzieren und dadurch Heißwasserüberschüsse zu vermeiden. Die zusätzlich in das Wasser bei der Würzekühlung eingespeiste Wärmeenergiemenge kann dann in beliebiger Weise durch andere Prozesse im Sudhaus oder in der Brauereianlage abgenommen werden, um das Wasser nach dem entsprechenden Entzug von Wärmeenergie wiederum in den Hauptheißwassertank bei der üblichen Heißwassertemperatur einzuspeisen.

Beim Brauprozess und insbesondere bei der Würzeherstellung handelt es sich vielfach um einen diskontinuierlichen Prozess, bei dem die notwendigen Prozesswärmemengen diskontinuierlich zugeführt werden müssen. Um die Wärmeenergie, die durch Erhitzung des Wassers bis auf die Zwischentemperatur zusätzlich in das Wasser eingespeichert wurde, diskontinuierlich für andere Prozesse nutzen zu können, ist es vorgesehen, dass das im Würzekühler auf die Zwischentemperatur erhitzte Wasser in einem dem Würzekühler nachgeordneten Zwischenspeichertank gepuffert wird. Dadurch kann je nach Wärmeenergiebedarf das Wasser aus dem Zwischenspeichertank entnommen und die darin enthaltene Wärme durch Wärmeübertragung auf ein anderes Medium übertragen werden, wobei das Wasser selbst von der Zwischentemperatur auf die Heißwassertemperatur im Hauptheißwassertank heruntergekühlt wird.

Mit welcher Temperaturspreizung der Würzekühler arbeitet, d.h. um welche Temperaturdifferenz das Wasser bzw. die Würze im Würzekühler erhitzt bzw. abgekühlt wird, ist grundsätzlich beliebig. Gemäß einer bevorzugten Variante ist es vorgesehen, dass das Wasser im Würzekühler mit einer Temperaturspreizung im Bereich von 88 K bis 95 K erhitzt wird. Auch die Temperaturabsenkung der Würze im Würzekühler liegt vorteilhafterweise im Bereich von ca. 88 K bis 95 K.

Insbesondere ist es vorteilhaft, wenn das Wasser im Würzekühler von einer Kaltwassertemperatur im Bereich zwischen 2 °C und 6 °C auf eine Zwischentemperatur im Bereich zwischen 90 °C und 96 °C erhitzt wird.

Auch bei der Abkühlung der Würze im Würzekühler ist eine Temperaturspreizung im Bereich von 88 K bis 95 K besonders vorteilhaft.

Insbesondere ist es gemäß einer bevorzugten Variante vorgesehen, dass die Würze im Würzekühler von einer Heißwürzetemperatur im Bereich zwischen 95 °C und 99 °C auf eine Anstelltetnperatur im Bereich zwischen 5 °C und 20 °C, insbesondere zwischen 10 °C und 15°C, abgekühlt wird.

Im Hinblick auf die Vermeidung von unnötigen Heißwasserüberschüssen sollte das Massenverhältnis zwischen der den Würzekühler durchströmenden Würze und dem den Würzekühler durchströmenden Wasser im Bereich zwischen 0,1 und 1,1, insbesondere ungefähr bei 1,0, liegen.

In welcher Weise die Wärmeenergie, die zusätzlich in dem auf die Zwischentemperatur erhitzten Wasser enthalten ist, genutzt wird, ist grundsätzlich beliebig. Besonders einfach und kostengünstig kann dies erfolgen, wenn dem Zwischenspeichertank ein Wärmeübertrager nachgeordnet ist, in dem das Wasser von der Zwischentemperatur auf die Heißwassertemperatur im Hauptheißwassertank heruntergekühlt wird und dabei die entsprechende Wärmemenge auf ein anderes Medium, beispielsweise auf eine Reinigungsflüssigkeit, andere Wässer, Maische oder Würze, übertragen wird.

Bevorzugt sollte das Wasser in dem dem Zwischenspeichertank nachgeordneten Wärmeübertrager von einer Zwischentemperatur im Wärmebereich zwischen 90 °C und 96 °C auf eine Heißwassertemperatur im Bereich zwischen 75 °C und 85 °C heruntergekühlt werden.

Welches Medium in dem dem Zwischenspeichertank nachgeordneten Wärmeübertrager durch Wärmeübertragung von dem auf die Zwischentemperatur erhitzten Wasser erhitzt wird, ist grundsätzlich beliebig. Als besonders geeignet hat es sich erwiesen, dass der dem Zwischenspeichertank nachgeordnete Wärmeübertrager in der Art einer Würzeheizeinrichtung ausgebildet ist. In dieser Würzeheizeinrichtung kann dann die Läuterwürze nach dem Abläutern und vor dem Würzekochen erwärmt werden, so dass für die Erhitzung der Läuterwürze während des Würzekochens selbst weniger Primärenergie (z.B. in Form von Dampf oder Heizheißwasser, sog. "Superheated water") eingesetzt werden muss.

Gemäß einer bevorzugten Verfahrensvariante ist es vorgesehen, dass die Läuterwürze in dem dem Zwischenspeichertank nachgeordneten Wärmeübertrager um eine Temperatur im Bereich von 10 K bis 25 K erwärmt wird.

Alternativ oder additiv kann der dem Zwischenspeichertank nachgeordnete Wärmeübertrager auch in der Art einer Maischeheizeinrichtung ausgebildet sein, mit der Maische vor dem Abläutern erwärmt wird.

Welche Bauart als Zwischenspeichertank zur Pufferung des auf die Zwischentemperatur erhitzten Wassers verwendet wird, ist grundsätzlich beliebig. Es kann sich dabei um offene Tanks handeln. Besonders vorteilhaft ist es, wenn der Zwischenspeichertank in der Art eines Schichtenspeichers oder Verdrängungsspeichers ausgebildet ist. Bei der Bauart des Schichtenspeichers kann das auf die Zwischentemperatur erwärmte Wasser aus dem Würzekühler oben in den Tank eingeschichtet werden und das Wasser nach der Abkühlung von der Zwischentemperatur auf die Heißwassertemperatur im Tank unten eingeschichtet werden. Somit kann mit nur einem Tank für erwärmtes Wasser gearbeitet werden. Besonders vorteilhaft ist es aber, wenn mit zwei getrennten Tanks, die auch miteinander kombiniert sein können, z. B. übereinander gestapelt, gearbeitet wird.

Auch die Bauart des Würzekühlers zur Erhitzung des Wassers auf die Zwischentemperatur ist grundsätzlich beliebig. Besonders vorteilhaft sollte dieser Würzekühler in der Art eines Plattenwärmeübertragers ausgebildet sein. Besonders vorteilhaft ist es bei dem Verfahren, dass im Gegensatz zu bekannten Möglichkeiten der Energierückgewinnung am Würzekühler nur mit einem sogenannten einstufigen Wärmeübertrager gearbeitet werden kann. Einstufig bedeutet, dass die abzukühlende Würze nur durch ein anderes Medium gekühlt wird. Bekannte mehrstufige Wärmeübertrager arbeiten beispielsweise mit zwei oder mehr anderen Medien, beispielsweise mit Wasser und Glykol oder Ammoniak.

Die erfindungsgemäße Sudhausanlage ist gattungsgemäß mit einem Würzekühler ausgestattet, mit dem die Würze nach der Würzekochung und vor der Zugabe von Hefe von einer Heißwürzetemperatur auf die gewünschte Anstelltemperatur abgekühlt werden kann. Der Würzekühler ist dabei in der Art eines Wärmeübertragers ausgebildet und wird mit Wasser gekühlt. Weiter umfasst die Sudhausanlage einen Hauptheißwassertank, in dem das im Würzekühler von einer Kaltwassertemperatur erwärmte Wasser bei einer Heißwassertemperatur gespeichert werden kann. Erfindungsgemäß ist dem Würzekühler ein Zwischenspeichertank nachgeordnet, in dem das im Würzekühler auf eine Zwischentemperatur erhitzte Wasser gepuffert werden kann. Die Zwischentemperatur im Zwischenspeichertank liegt dabei über der Heißwassertemperatur des Wassers im Hauptheißwassertank.

Erfindungsgemäß ist dem Zwischenspeichertank ein Wärmeübertrager nachgeordnet, der in der Art einer Maischeheizeinrichtung ausgebildet ist. Mit dieser Maischeheizeinrichtung kann Maische vor dem Abläutern erwärmt werden.

Gemäß einer bevorzugten Anlagenvariante kann dem Zwischenspeichertank zusätzlich ein Wärmeübertrager nachgeordnet sein, der in der Art einer Würzeheizeinrichtung ausgebildet ist. Mit dieser Würzeheizeinrichtung kann Läuterwürze nach dem Abläutern und vor dem Würzekochen erwärmt werden.

Um eine höhere Temperaturvariabilität zu erreichen, kann der Würzeheizeinrichtung und/oder der Maischeheizeinrichtung ein Booster vorgeordnet werden. Mit dem Booster kann das Wasser aus dem Zwischenspeichertank erwärmt werden, um ein höheres Temperaturniveau zu erreichen. Dazu kann der Booster mit Dampf oder Heißwasser beheizt werden.

Der Zwischenspeichertank sollte bevorzugt in der Art eines Schichtenspeichers oder Verdrängungsspeichers ausgebildet sein.

Der Würzekühler sollte bevorzugt in der Art eines Plattenwärmeübertragers, insbesondere in der Art eines einstufigen Plattenwärmeübertragers, ausgebildet sein.

Verschiedene Aspekte des Verfahrens werden nachfolgend anhand der Zeichnung beispielhaft erläutert.

Es zeigt:
- Fig. 1: den schematisierten Aufbau einer Sudhausanlage zur Durchführung des Verfahrens;
- Fig. 2: den schematisierten Aufbau einer zweiten Ausführungsform einer Sudhausanlage zur Durchführung des Verfahrens.

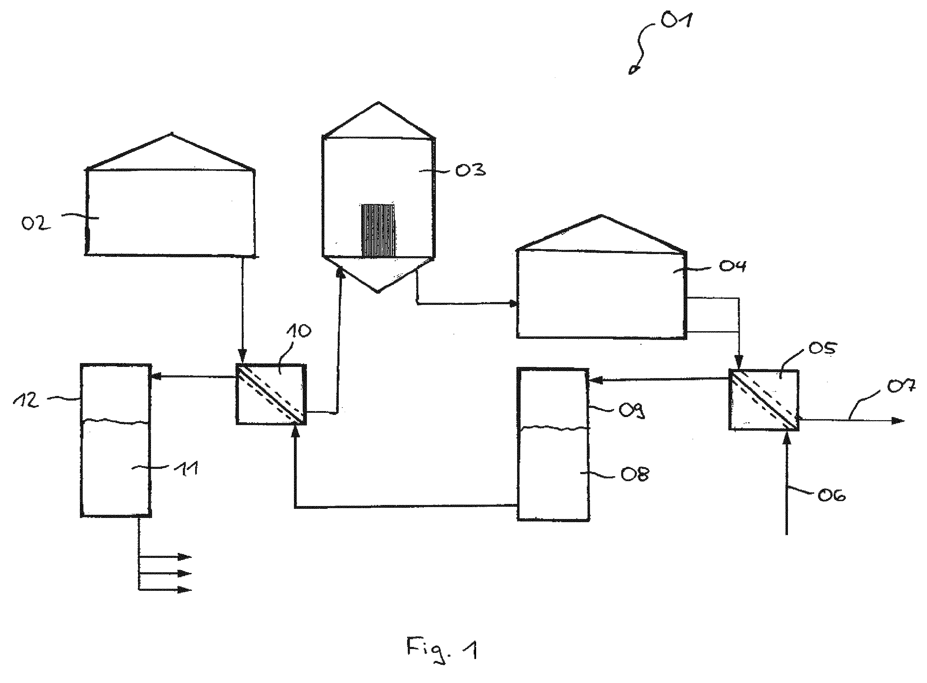

In der Darstellung gemäß Fig. 1 sind nur die Teile einer Sudhausanlage dargestellt, die zum Verständnis des Verfahrens notwendig sind. Die Sudhausanlage 01 umfasst neben anderen Einrichtungen und Behältern üblicherweise ein Gefäß 02, eine Würzekocheinrichtung 03 und einen Whirlpool 04. Bei dem Gefäß 02 kann es sich beispielsweise um einen Läuterbottich, eine anderes geartete Läutereinrichtung oder um ein beliebiges Vorlaufgefäß handeln. Im Gefäß 02 weist die Würze beispielsweise eine Temperatur von 75 °C auf. In der Würzekocheinrichtung 03 wird die Würze auf eine Temperatur im Bereich des Siedepunkts bei 100 °C oder darüber erhitzt und/oder gekocht, Im Whirlpool 04 hat die Würze dann wiederum eine Temperatur von ungefähr 98 °C, was der Heißwürzetemperatur im Sinne des Verfahrens entspricht. Von der Heißwürzetemperatur bei 98 °C muss die Würze vor der Zugabe der Hefe im Gärkeller auf eine Anstelltemperatur von beispielsweise 9 °C heruntergekühlt werden. Um dies zu erreichen, ist in der Sudhausanlage 01 ein Würzekühler 05 vorgesehen, der mit Eiswasser 06, das beispielsweise eine Temperatur im Bereich zwischen 2 °C und 6 °C aufweist, gekühlt werden kann. Das Eiswasser 06 kann beispielsweise einem nicht dargestellten Pufferspeicher entnommen werden. Durch die Würzekühlung im Würzekühler 05 weist die zum Überpumpen in den Gärkeller vorgesehene Würze 07 die gewünschte Anstelltemperatur von beispielsweise 9 °C auf.

Der Würzekühler 05 ist erfingdungsgemäß so ausgelegt, dass das Eiswasser 06 von seiner Kaltwassertemperatur bei 2 °C bis 6 °C auf eine Zwischentemperatur von beispielsweise 94 °C erhitzt wird. Das auf 94 °C erhitzte Wasser 08 wird in einem Zwischenspeichertank 09 gepuffert und kann von dort je nach Wärmebedarf der nachgeordneten Prozesse diskontinuierlich oder kontinuierlich abgerufen werden.

Zur Nutzung der im Wasser 08 zusätzlich eingespeicherten Wärme ist ein als Wärmeübertrager ausgebildeter Würzeerhitzer 10 vorgesehen. Im Würzeerhitzer 10 wird das Wasser 08 mit einer Temperatur von 94 °C auf eine Temperatur von 79 °C heruntergekühlt und zugleich die Läuterwürze aus dem Läuterbottich 02 beim Überpumpen in die Würzekocheinrichtung 03 um 10 bis 20 K erwärmt. Nach Durchlaufen des Würzeerhitzers 10 gelangt das Wasser 11 mit einer Temperatur von 79 °C in den Hauptheißwassertank 12. Auf diese Weise kann dem gesamten Sudhaus aus dem Hauptheißwassertank 12 Warmwasser mit einer Temperatur von 79 °C zur Verfügung gestellt werden.

Durch die erfindungsgemäße Erhitzung des Wassers 08 auf eine Zwischentemperatur oberhalb der Wassertemperatur im Hauptheißwassertank 12 kann die zur Kühlung der Würze 07 notwendige Heißwassermenge so weit reduziert werden, dass Heißwasserüberschüsse, die nicht verwendet werden können, sondern entsorgt werden müssen, weitgehend vermieden oder zumindest verringert werden. Die im Wasser 08 aufgrund der höheren Zwischentemperatur enthaltene Wärmeenergie kann dann beispielsweise in dem Würzeerhitzer 10 genutzt werden, um die Läuterwürze zu erwärmten, so dass im Ergebnis wiederum das Wasser 11 die notwendige Temperatur von 79 °C zur Versorgung des Sudhauses aufweist und trotzdem die im Wasser 08 zusätzliche Wärmeenergie nicht verloren geht.

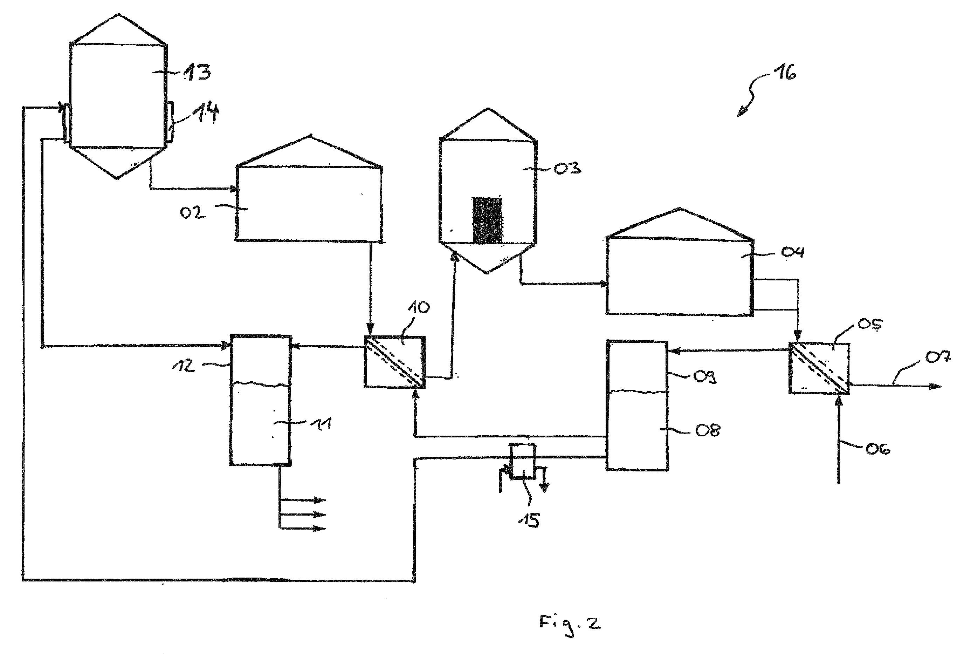

Fig. 2 zeigt den schematisierten Aufbau einer zweiten Ausführungsform 16 einer Sudhausanlage zur Durchführung des Verfahrens. Die Sudhausanlage 16 ist dahingehend erweitert, dass das auf eine Zwischentemperatur erwärmte Wasser alternativ oder additiv auch zur Erwärmung von Maische verwendet werden kann. Dazu wird das Wasser 08 aus dem Zwischenspeichertank 09 zu einem beliebig gestalteten Wärmeübertrager 14 eines Maischgefäßes 13 geleitet. Der Wärmeübertrager 14 kann beispielsweise eine am oder im Gefäß angeordnete Heizfläche sein, aber auch ein externer Wärmeübertrager. Dort gibt das Wasser 08 die Wärme an die Maische ab, wird auf Heißwassertemperatur abgekühlt und in den Hauptheißwassertank 12 geleitet.

Vorteilhaft an dem alternativen Verfahren gemäß Fig. 2 ist, dass in diesem Fall sogar ein Energiespeichersystem an der Würzepfanne installiert sein kann, mit dessen Hilfe die Würze während des Einleitens in die Würzepfanne erhitzt werden kann. Die Wärmeenergie aus dem Wasser 08 wird in diesem Fall an die Maische übertragen.

Natürlich ist es auch möglich einen an sich bekannten Booster 15 dem Zwischenspeichertank 09 nachzuschalten, um die Erhitzung der Würze und/oder der Maische auf ein höheres Niveau zu ermöglichen. Der Booster 15 ist ein Wärmeübertrager, der mittels eines Wärmeträgers, z.B. Dampf, das Wasser von der Zwischentemperatur auf eine noch höhere Temperatur erwärmt, bevor das Wasser seine Energie an die Würze bzw. Maische abgibt. Dieser Booster 15 kann dann auch für das Anfahren des Systems nach längeren Pausen verwendet werden, wenn die Temperatur im Zwischenspeicher 09 nicht ausreicht.

Ergänzen lässt sich das Verfahren ebenfalls durch die Verwendung von Energie, die beim Kühlen des Mischkondensats aus der mechanischen oder thermischen Brüdenverdichtung zurückgewonnen werden kann. Diese Energie kann ebenfalls auf Wasser übertragen werden, welches dann mit Zwischentemperatur in den Zwischenspeichertank gepuffert wird.

## Patentansprüche

1. Sudhausanlage (01, 16) zur Würzeherstellung mit einem Würzekühler (05), mit dem die Würze (07) nach der Würzekochung und vor der Zugabe von Hefe von einer Heißwürzetemperatur auf die gewünschte Anstelltemperatur abgekühlt werden kann, wobei der Würzekühler (05) in der Art eines Wärmeüberträgers ausgebildet ist und mit Wasser (06) gekühlt wird, und mit einem Hauptheißwassertank (12), in dem das im Würzekühler (05) von einer Kaltwassertemperatur erwärmte Wasser (06) bei einer Heißwassertemperatur gespeichert werden kann,
**dadurch gekennzeichnet**
**dass** dem Würzekühler ein Zwischenspeichertank (09) nachgeordnet ist, in dem das im Würzekühler (05) auf eine Zwischentemperatur erhitzte Wasser (08) gepuffert werden kann, wobei die Zwischentemperatur im Zwischenspeichertank (09) über der Heißwassertemperatur des Wassers (11) im Hauptheißwassertank (12) liegt, wobei dem Zwischenspeichertank (09) ein Wärmeübertrager (14) nachgeordnet ist, der in der Art einer Maischeheizeinrichtung ausgebildet ist, mit der Maische vor dem Abläutern erwärmt werden kann.

2. Sudhausanlage nach Anspruch 1,
**dadurch gekennzeichnet**
**dass** dem Zwischenspeichertank (09) ein Wärmeübertrager (10) nachgeordnet ist, der in der Art einer Würzeheizeinrichtung ausgebildet ist, mit der Läuterwürze nach dem Abläutern und vor dem Würzekochen erwärmt werden kann.

3. Sudhausanlage nach Anspruch 1 oder 2,
**dadurch gekennzeichnet**
**dass** der Würzeheizeinrichtung (10) und/oder der Maischeheizeinrichtung (14) ein Booster (15) vorgeordnet ist, mit dem das Wasser aus dem Zwischenspeichertank (09) erwärmt werden kann.

4. Sudhausanlage nach einem der Ansprüche 1 bis 3,
**dadurch gekennzeichnet**
**dass** der Zwischenspeichertank (09) in der Art eines Schichtenspeichers oder Verdrängungsspeichers ausgebildet ist.

5. Sudhausanlage nach einem der Ansprüche 1 bis 4,
**dadurch gekennzeichnet**
**dass** der Würzekühler (05) in der Art eines Plattenwärmeübertragers, insbesondere in der Art eines einstufigen Plattenwärmeübertragers, ausgebildet ist.

## Claims

1. A brewhouse facility (01, 16) for wort production having a wort cooler (05), by means of which the wort (07) can be cooled from a hot wort temperature to a desired pitching temperature after cooking the wort and before adding yeast, wherein the wort cooler (05) is formed in the type of a heat exchanger and is cooled by means of water, and having a main hot water tank (12), in which the water (06) previously heated from a cold water temperature in the wort cooler (05) can be stored at a hot water temperature,
**characterized in that**
a temporary storage tank (09) is arranged downstream of the wort cooler, the water (08) previously heated to a temporary temperature in the wort cooler (05) being able to be buffered in said temporary storage tank, wherein the temporary temperature in the temporary storage tank (09) is hotter than the hot water temperature of the water (11) in the main hot water tank (12), wherein a heat exchanger (14) is arranged downstream of the temporary storage tank (09), said heat exchanger (14) being formed in the type of a mash heating device, by means of which mash can be heated before lautering.

2. The brewhouse facility according to claim 1,
**characterized in that**
a heat exchanger (10) is arranged downstream of the temporary storage tank (09), said heat exchanger being formed as a wort heating device, by means of which lauter wort can be heated after lautering and before cooking the wort.

3. The brewhouse facility according to claim 1 or 2,
**characterized in that**
a booster is arranged upstream of the wort heating device (10) and/or the mash heating device (14), the water from the temporary storage tank (09) being able to be warmed by means of said booster.

4. The brewhouse facility according to any one of the claims 1 to 3,
**characterized in that**
the temporary storage tank (09) is formed in the type of a layered storage tank or a displacement storage tank.

5. The brewhouse facility according to any one of the claims 1 to 4,
**characterized in that**
the wort cooler (05) is formed in the type of a plate heat exchanger, in particular in the type of a single-stage plate heat exchanger.

## Revendications

1. Unité de brassage (01, 16) pour produire du moût, ayant un refroidisseur de moût (05), au moyen duquel le moût (07) peut être refroidi à partir d'une température de moût chaude jusqu'à une température de fermentation désirée après l'ébullition du moût et avant l'addition de levure, dans laquelle le refroidisseur de moût (05) est formé en tant qu'échangeur thermique et est refroidi en utilisant de l'eau, et ayant un réservoir principal d'eau chaude (12), dans lequel l'eau ayant été chauffée à partir d'une température d'eau froide dans le refroidisseur de moût (05) peut être stockée à une température d'eau chaude,
**caractérisée en ce que**,
un réservoir de stockage temporaire (09) est situé en aval du refroidisseur de moût (09) l'eau (08) ayant été chauffée à une température temporaire dans le refroidisseur de moût (05) pouvant être tamponnée dans ledit réservoir de stockage temporaire (09), dans lequel la température temporaire dans le réservoir de stockage temporaire (09) est plus chaude que la température d'eau chaude de l'eau (11) dans le réservoir principal d'eau chaude (12), dans lequel un échangeur thermique (14) est situé en aval du réservoir de stockage temporaire (09), ledit échangeur thermique (14) étant formé en tant que dispositif de chauffage de brassin, au moyen duquel le brassin peut être chauffé avant la clarification.

2. Unité de brassage selon la revendication 1,
**caractérisée en ce qu'**
un échangeur thermique (10) est situé en aval du réservoir de stockage temporaire (09), ledit échangeur thermique (10) étant formé en tant que dispositif de chauffage de moût, au moyen duquel le moût de brassin peut être chauffé après la clarification et avant l'ébullition de moût.

3. Unité de brassage selon la revendication 1 ou 2,
**caractérisée en ce qu'**
un booster (15) est situé en amont du dispositif de chauffage de moût (10) et/ou du dispositif de chauffage de brassin (14), l'eau du réservoir de stockage temporaire (09) pouvant être chauffée au moyen dudit booster.

4. Unité de brassage selon l'une quelconque des revendications 1 à 3,
**caractérisée en ce que**
le réservoir de stockage temporaire (09) est formé en tant que réservoir de stockage stratifié ou en tant que réservoir de stockage à déplacement.

5. Unité de brassage selon l'une quelconque des revendications 1 à 4,
**caractérisée en ce que**
le refroidisseur de moût (05) est formé en tant qu'échangeur thermique à plaques, en particulier en tant qu'échangeur thermique à plaques à phase unique.
